# EUROPEAN PATENT APPLICATION

(11) **EP 1 980 715 A1**
(43) Date of publication of application: **15.10.2008**
(21) Application number: 07007612.0
(22) Date of filing: 13.04.2007
(51) Int. Cl.: F01D 5/16, F16F 7/01

(54) **Damping of vibrations in blades and guide vanes with grains**

(71) Applicant: SIEMENS AKTIENGESELLSCHAFT, 80333 München (DE)
(72) Inventor: Lee, Yong, 61246 Finspong (SE)

(57) **Abstract**

The invention relates to a blade (1,1') for a turbo-engine, in particular for a turbine or a compressor, with at least one blade leaf (5,5') and a blade root (3,3') to be attached on a rotor or a stator of the turbine. The blade is characterized by at least one cavity (6,6') filled with loose granular material, e.g. sand, granules or fill mixtures thereof, being integrated into the blade leaf (5,5') and/or the blade root (3,3').

## Description

The invention generally relates to a guide blade (guide vane) or rotor blade (bucket) of a turbo-engine, and to the problems concerning their attachment to the rotor or stator of the turbo-engine by means of blade roots.

Vibrations in the guide or moving blades of a turbo-engine, which are excited by the air stream, or additionally, in the case of the moving blades, by rotation, constitute a serious problem for the durability and the efficiency of compressors or thermal turbo-machines. The blade root, in particular, which serves the purpose of transmitting force and moment onto the rotor or stator, is thus subjected to large stresses, in particular when the blade or the blade leaf is excited in the range of its resonance frequencies. Thus, numerous measures for effecting vibration damping in the blade(s) are known. For vibration damping, cover plates (shroud elements) are often attached to the tip of the blade leaf or supporting wings within the blade. This is described, for example, in German patent specification DE 1,159,965. Austrian patent specification AT 254,227 also discloses a cover plate of a turbine or compressor blade ring, in which the cover plates are pressed against one another by the action of force. The arrangement leads to an elastic prestressing of the blade. This torsional prestress of the blade takes place between the cover plate and the blade root, but leads to additional load on the blade root and on the rotor. Since the forces which occur not only have to be absorbed by the blade, but also by the blade root and by the rotor, these have a correspondingly massive construction.

Spacers are often arranged between the individual blade roots of the turbine blades, which spacers are intended to absorb the forces and also serve for vibration damping. Thisis known, for example, from the patents U.S. Pat. No. 2,916,257 or else U.S. Pat. No. 3,734,645. Another moving-blade fastening is also known from European preliminary publication EP-Al-520,258. For the limitation of circumferential forces as a result of thermal expansions, longitudinal webs are provided between the moving blades. Such prior art has the disadvantage, however, that the load and the vibration is transmitted basically via the blade root to the rotor. However, the relatively massive construction of the rotor and blade roots has adverse effects particularly on the width of the blade and blade root and of the wheel disk and consequently also on the entire length of the rotor or stator, respectively. Out of US 06830435 it is known to fasten the blades of a turbine or compressor into a groove on the rotor or stator of the turbine or compressor by blade roots, there being no play or a prestress prevailing between the root plate and/or the blade root, and adjacent blades thereby being supported relative to one another with respect to torsional moments and not or only slightly on the rotor or stator. This is possible, for example, by incorporating a bevel.

It is a common characteristic of the known prior art that vibrations are not absorbed, but only that measures for vibration damping are carried out which are comparatively complicated mechanically.

It is therefore the object of the invention to improve the prior art in such a way that the vibrations occurring in a blade are absorbed as effectively as possible, inter alia in the resonance range of the blade, so that the result is a simplified and more durable structure of the respective blade or of its root. This object is solved by means of a blade according to claim 1, as well as by the turbo-engine of the independent claim. Advantageous embodiments are the subject matter of the dependent claims.

The blade according to the invention for a turbo-engine, in particular for a turbine or a compressor, comprises at least one blade leaf and a blade root to be attached to a rotor or stator of the turbine. The blade according to the invention is characterized by at least one cavity filled with granular material, e.g. sand, granules or fill mixtures thereof, being integrated into the blade leaf and/or the blade root.

Due to the arrangement of the cavity with the granular material in the blade, and because of its vibration-absorbing effect, vibrations in the blade are reduced and the stresses that would otherwise result from the vibration is kept away from the blade root, which is a component particularly subjected to stress. Thus, the blade becomes more durable, and the blade root can be designed to be more compact in comparison, which allows the stator or rotor advantageously to be shortened, or, given the same length, the number of the rows of blades to be increased. In addition, the use of less expensive foot fastenings is made possible, because of the reduced stress due to vibrations.

Granular material, such as sand, granules or fill mixtures thereof, have proven particularly effective in damping vibrations because of the frictional forces occurring between the grains. So far, cavities were not provided in the highly-stressed blades for fear of the influence that providing such cavities would have on the stability. Contrary to these expectations and surprisingly, however, it has been found during the course of experiments connected with this invention that the vibration-absorbing effect connected with the filling does not only compensate the possibly stability-affecting effect of the cavity by far, but that in addition, this leads to an increase in stability due to the strongly vibration-absorbing, and thus vibration-damping, effect, in particular in the resonance range. Thus the grains of the loose fill mixture of sand or granules provide an effective absorption of the vibrations and resonances occurring in the blade leaf, due to the frictional forces between them and the comparatively free mobility of the grains in relation to each other.

Moreover, the fill mixtures, as compared to panels of vibration-absorbing solid material, such as plastics, prove to be wear resistant, even free of wear in the case of sand, and as temperature-insensitive, which is of great importance in the case of such machines.

The inventors have found that blaster sands comprising particles of Al₂O₃ or steel have been very effective in respect of vibration damping. In case of aluminium oxide a particle distribution having a average particle size in the range of G7 0.2 - 0.4 mm and in case of steel G17 0.42 - 0.85 mm have been especially effective.

Additionally, the blaster sand product known under the name Eder Ti-Grit, for instance commercially available from LIVAB Verktyg AB, Sweden, has proven to be very effective and is used in a further advantageous embodiment according to the invention.

In another advantageous embodiment, the blade is a guide blade. This construction has proven particularly advantageous in the case of the guide blade arranged on the stator, generally in the area of the air duct. Guide blades, in particular, are particularly susceptible for resonance excitation due to the air streams they are subjected to. The reason for this, among other things, is that guide blades are generally formed to be comparatively thin in order to present as little flow resistance as possible. Because of the cavities according to the invention having the above-mentioned "granular" filling of sand, granules or fill mixtures thereof, other constructive measures stabilizing the blade may advantageously be dispensed with. The flow behavior in the air duct is affected.

According to another advantageous embodiment, the cavity is arranged substantially in the area of the blade root. Thus, absorption of the vibrations directly before the blade root can be accomplished in order to reduce the stresses upon it.

In another advantageous embodiment, the cavity is substantially arranged in the area of the end of the blade leaf distant from the blade root. At the end of the blade leaf, i.e. the tip of the blade, the amplitude of vibration is particularly large. An absorption acting in this area has a vibration-damping effect on the blade leaf and is thus beneficial as regards stability, in particular for the blade leaf.

Moreover, the invention relates to a turbo-engine, in particular to a turbine or compressor, with a blade attached thereto, wherein the blade according to the invention is characterized by at least one cavity filled with granular material, e.g. sand, granules or fill mixtures thereof, being integrated into the blade leaf and/or the blade root. Due to the arrangement of the cavity in the blade, vibrations in the blade are absorbed and the stresses that would otherwise result from the vibration are kept away from the blade root, which is a component particularly subjected to stress. The turbo-engine thus becomes more durable. Other measures that generally have a negative effect on flow behavior can thus advantageously be dispensed with.

In the drawings
- Fig.1: shows an embodiment of the guide blade according to the invention of a steam turbine with a cavity provided thereon, in which granules are received;
- Fig.2: is a further sectional perspective view of the embodiment shown in Fig. 1;
- Fig.3: shows an embodiment of the rotor blade according to the invention of a steam turbine with a cavity provided thereon, in which granules are received.

Only elements that are essential for the invention are shown. The same elements in different drawings are provided with the same reference numerals.

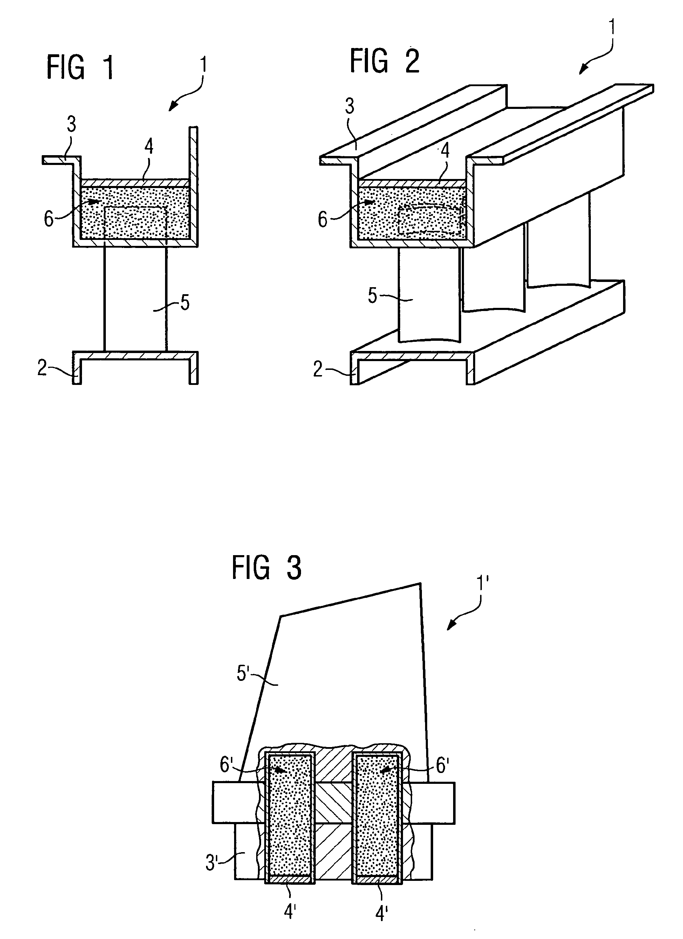

Fig. 1 shows a blade 1 of a turbo-engine, i.e., for example, of a steam turbine or a compressor. The blade 1, which is a guide blade, comprises a blade root 3, an adjoining root plate 4, a cover plate 2 and a blade leaf 5 located between the root plate 4 and the cover plate 2. A cavity 6 filled with granules is provided, for absorption of vibration, in the area of the blade leaf 5 oriented towards the blade root 3. The cover plate 4 closes the cavity 6, which, during mounting, is open towards the blade root for filling. The blade root 3 serves the purpose of fastening on the stator of the turbine. Fig. 2 is a perspective sectional view of the embodiment of the blade of Fig. 1. Fig. 2 shows that the blade leaf 5 extends for a predetermined length into the cavity 6 filled with granules in order to achieve a effective vibration transfer between the blade leaf 5 and the granules within the cavity and thus an exceptional vibration damping. It is up to the person skilled in the art to adjust and optimize the length of the portion of the blade leaf 5 extending within the cavity 6 by some easy tests.

Fig. 3 shows a blade 1' of a turbo-engine, i.e., for example, of a steam turbine or a compressor. The blade 1', which is a rotor blade, comprises a blade root 3', two root plates 4' adjacent thereto, and a blade leaf 5' extending in the opposite direction. In the area of the blade leaf 5' oriented towards the blade root 3', and in the blade root 3', two cavities 6', which are filled with granules, are provided for absorbing vibrations. The root plates 4' close the cavities 6', which, during mounting, are open towards the blade root for filling. The blade root 3' serves the purpose of fastening on the rotor of the turbine.

### LIST OF REFERENCE NUMERALS

- 1, 1': blade
- 2: cover plate
- 3, 3': blade root
- 4, 4': root plate(s)
- 5, 5': blade leaf

## Claims

1. Blade (1, 1') for a turbo-engine, in particular for a turbine or a compressor, with at least one blade leaf (5, 5') and a blade root (3, 3') to be attached on a rotor or a stator of the turbine,
**characterized in, that** at least one cavity (6, 6') filled with granular material, such as sand, granules or fill mixtures thereof, is integrated into the blade leaf (5, 5') and/or the blade root (3, 3').

2. Blade according to claim 1,
**characterized in, that** the blade is a guide blade (1).

3. Blade according to claim 1,
**characterized in, that** the blade is a rotor blade (1').

4. Blade according to one of the preceding claims,
**characterized in, that** the cavity (6, 6') is substantially arranged in the area of the blade root (3, 3').

5. Blade according to one of the preceding claims,
**characterized in, that** the cavity (6, 6') is substantially arranged in the area of the end of the blade leaf distant from the blade root.

6. Turbo-engine, in particular a turbine or compressor,
**characterized by** at least one blade (1, 1') according to one of the claims 1 to 5.
